# EUROPÄISCHE PATENTSCHRIFT

(11) **EP 3 325 421 B1**
(45) Veröffentlichungstag und Bekanntmachung des Hinweises auf die Patenterteilung: **04.09.2024**
(21) Anmeldenummer: 16736154.2
(22) Anmeldetag: 07.07.2016
(51) Int. Cl.: C04B 7/36, F27D 17/00, F27B 7/20, B01D 53/56, B01D 53/75, B01D 53/76, B01D 53/79

(54) **VERFAHREN UND ANLAGE ZUR HERSTELLUNG VON ZEMENTKLINKER ODER ANDEREN MINERALISCHEN PRODUKTEN UND ZUR ENTSTICKUNG VON BYPASSGASEN**
PROCESS AND PLANT FOR PRODUCING CEMENT CLINKER OR OTHER MINERAL PRODUCTS AND FOR REMOVING NITROGEN OXIDES FROM BYPASS GASES
PROCÉDÉ ET INSTALLATION DE FABRICATION DE CLINKER DE CIMENT OU D'AUTRES PRODUITS MINÉRAUX, ET DE DÉNITRURATION DE GAZ DE DÉRIVATION

(30) Priorität: 23.07.2015 DE 102015111974
(43) Veröffentlichungstag der Anmeldung: 30.05.2018
(73) Patentinhaber: thyssenkrupp Polysius GmbH, 59269 Beckum (DE); thyssenkrupp AG, 45143 Essen (DE)
(72) Erfinder: FRIE, Sebastian, 48165 Münster (DE); FLEUTER, Peter, 59227 Ahlen (DE); STENDER, Timo, 58730 Fröndenberg (DE)
(74) Vertreter: thyssenkrupp Intellectual Property GmbH
(86) Internationale Anmeldenummer: PCT/EP2016/066068
(87) Internationale Veröffentlichungsnummer: WO 2017/012880

(56) Entgegenhaltungen:
- EP-A1- 3 085 431
- EP-A1- 3 294 441
- WO-A1-01/66233
- WO-A1-2010/023105
- WO-A1-2012/176161
- WO-A1-2015/052123
- CH-B1- 698 991
- CN-U- 202 555 173
- DE-A1- 19 649 922
- "Alternative Control Techniques Document Update -NO x Emissions from New Cement Kilns", 26 November 2007 (2007-11-26), XP055265149, Retrieved from the Internet <URL:https://www3.epa.gov/ttncatc1/dir1/cement_updt_1107.pdf> [retrieved on 20160413]

## Beschreibung

Die Erfindung betrifft ein Verfahren und Anlage zur Herstellung von Zementklinker oder anderen mineralischen Produkten und zur Entstickung von Bypassgasen.

Beispielsweise bei der Zementklinkerherstellung wird das Rohmehl in einem Vorwärmer mit Ofen- und/oder Calcinatorabgasen vorgewärmt, anschließend in einem Calcinator vorcalciniert und schließlich in einer Wärmebehandlungseinrichtung, insbesondere einem Drehrohrofen, fertiggebrannt. Bei der Verbrennung von Brennstoffen im Drehrohrofen und im Calcinator entstehen hohe Stickoxidmengen, die ein effektives Stickoxid-Minderungsverfahren erfordern. Dabei kommen derzeit zwei Verfahren zum Einsatz: Bei der katalytischen Entstickung (SCR) werden V₂O₅-haltige Katalysatoren eingesetzt, die im Abgasstrang nach dem Vorwärmer oder nach einem Haupt-Entstaubungsfilter platziert werden. Alternativ kommt die nicht katalytische Entstickung (SNCR) durch Eindüsung von Ammoniak-Wasser in das Rauchgas der Anlage im Bereich des Calcinators zur Anwendung, wie dies beispielsweise aus CH 698 991 B1, CN 202 555 173 U und DE 196 49 922 A1 bekannt ist.

Beispielsweise durch den zunehmenden Einsatz von Kunststoffabfällen und die damit verbundene Substitution von konventionellen, fossilen Brennstoffen, wie Kohle, Gas oder Öl, steigt der Chlor-Eintrag in das Herstellungsverfahren. Es bildet sich dabei zwischen Vorwärmer und Drehrohrofen ein geschlossener Chlor-Kreislauf aus, der zu erheblichen Betriebsproblemen führt und üblicherweise dadurch entlastet wird, dass ein Bypasssystem vorgesehen wird, sodass ein Teil des etwa 1.100°C bis 1.200°C heißen Abgases des Drehrohrofens zwischen dem Drehrohrofen und dem Vorwärmer, insbesondere zwischen dem Drehrohrofen und dem Calcinator, aus dem System als Bypassgas ausgeschleust wird. Bei dieser Temperatur liegt das Chlor gasförmig vor, sodass es über das abgezweigte Bypassgas effektiv aus dem Kreislauf herausgenommen werden kann. Das Problem dieser Bypasssysteme besteht aber darin, dass die Bypassgase zwar in ihrer Menge meist gering sind (typischerweise 3-10% der Ofenabgase), aber einen hohen Gehalt an Stickoxiden aufweisen. Um niedrigste NO-Reingaswerte der Gesamtanlage sicher einhalten zu können, wird daher die Entstickung des Bypassgases zukünftig an Bedeutung gewinnen.

In der DE 10 2013 112 210 A1 und der WO 2015/052123 A1 wurden daher die katalytische Entstickung (SCR) der Bypassgase vorgeschlagen, wobei in der Bypassleitung ein entsprechender SCR-Katalysator vorgesehen wird. Aufgrund der meist relativ kleinen Bypassmengen ist jedoch der Einsatz eines SCR-Katalysators unter ökonomischen Gesichtspunkten grenzwertig. So erfordern diese Katalysatoren für die Einrichtung der Sensorik und der Infrastruktur eine relativ hohe Grundinvestition, die nur in untergeordnetem Maße mit dem Abgasvolumen steigt. Außerdem können die im Bypassgas angereicherten Schadstoffe, wie beispielsweise Alkalien, die katalytischen Zentren des Katalysators deaktivieren, was geringere Standzeiten der Katalysatoren zufolge hat. Es entstehen daher aufgrund der geringen Bypassgasmenge somit sehr hohe Minderungskosten je Kilogramm NO.

Aus der EP 3 294 441 A1 ist ein Bypasssystem in der Zementherstellung mit Mitteln zur Entfernung von NOₓ bekannt.

Aus der EP 3 085 431 A1 ist ein Verfahren zur Reinigung von Abgas aus der Herstellung von Zementklinker mittels selektiver, nicht-katalytischer Reduktion bekannt.

Der Erfindung liegt daher die Aufgabe zugrunde, eine kostengünstigere Entstickung zu gewährleisten. Erfindungsgemäß wird diese Aufgabe durch die Merkmale der Ansprüche 1 und 10 gelöst. Weitere Ausgestaltungen der Erfindung sind Gegenstand der Unteransprüche.

Beim erfindungsgemäßen Verfahren zur Herstellung von Zementklinker oder anderen mineralischen Produkten und zur Entstickung von Bypassgasen, welche zwischen einer Wärmebehandlungseinrichtung und wenigstens einer Vorwärmereinrichtung abgezweigt werden, wird das Bypassgas mittels wenigstens einem Kühlmittel auf eine Temperatur zwischen 800°C und 1000°C, vorzugsweise auf eine Temperatur zwischen 800°C und 950°C abgekühlt. Ferner wird ein ammoniakhaltiges Reduktionsmittel in fester, wässriger und/oder gasförmiger Form in das Bypassgas zur Minderung der enthaltenen Stickoxide eingebracht.

In der erfindungsgemäßen Anlage zur Herstellung von Zementklinker oder anderen mineralischen Produkten ist eine Wärmebehandlungseinrichtung, wenigstens eine Vorwärmereinrichtung und ein Bypasssystem vorgesehen, wobei das Bypasssystem eine zwischen der Wärmebehandlungseinrichtung und der wenigstens einen Vorwärmereinrichtung abzweigende Bypassleitung zur Abzweigung von Bypassgas, wenigstens eine Einrichtung zur Aufgabe eines Kühlmittels und wenigstens eine Entstickungszone zur selektiven nicht katalytischen Entstickung mit einer Einrichtung zur Aufgabe von ammoniakhaltigen Reduktionsmittel aufweist, wobei die Einrichtung zur Aufgabe des Kühlmittels und die Einrichtung zur Aufgabe des ammoniakhaltigen Reduktionsmittels gemeinsam genutzte, in der Bypassleitung mündende Düsen oder Lanzen aufweisen.

Damit in dem vergleichsweise kurzen Zeitfenster dennoch eine ausreichende SNCR-Reaktion, also die Reduktion der Stickoxide, erfolgen kann, sollte die SNCR-Reduktion möglichst schnell und effizient ablaufen. Durch die gleichzeitige Aufgabe des Kühlmittels und des ammoniakhaltigen Reduktionsmittels kann die SNCR-Reaktion besonders schnell und effektiv ablaufen. Auf diese Weise kann das für die SNCR-Reaktion besonders effektive Temperaturfenster zwischen 800°C und 1100°C schnell durchschritten werden, wodurch etwaige Anbackungen minimiert werden können.

Unter den anderen mineralischen Produkten sind beispielsweise Branntkalk oder Dolomit zu verstehen. Als Wärmebehandlungseinrichtung kommt für die Zementklinkerherstellung insbesondere ein Drehrohrofen in Betracht. Bei anderen mineralischen Produkten, wie Branntkalk oder Dolomit, können aber auch Schachtöfen oder Flugstrombehandlungseinrichtungen zur Anwendung kommen.

Prinzipiell besteht das Problem, dass die abgezogenen Bypassgase für eine effiziente SNCR-Reaktion eine zu hohe Temperatur aufweisen und daher zunächst auf eine Temperatur zwischen 800°C und 1100°C abgekühlt werden müssen. Auf diesem Temperaturniveau liegt aber auch der Schmelzpunkt der in den Bypassgasen enthaltenen Alkali-Salze, so dass der Staub der Bypassgase sehr adhäsiv wird. In der Folge kann es daher zu massiven Betriebsproblemen durch Anbackungen in der Bypassleitung kommen. Es ist deswegen von Vorteil, wenn die Temperatur des Bypassgases für maximal 0,1 s bis 5s in dem für Anbackungen kritischen Temperaturbereich von 800°C und 1100°C gehalten werden, bevor eine weitere Abkühlung erfolgt. Die Strömungsgeschwindigkeit des Bypassgases beträgt 1m/s bis 50 m/s.

Erfindungsgemäß wird das ammoniakhaltige Reduktionsmittel zusammen mit dem wenigstens einen Kühlmittel, bevorzugt entgegen der Strömungsrichtung des Bypassgases, in das Bypassgas eingebracht. Dadurch werden einen eine gute Verteilung des Reduktionsmittels und eine maximale Ausnutzung der SNCR-Reaktion bewirkt.

Als Kühlmittel eignet sich insbesondere Wasser, sodass das ammoniakhaltige Reduktionsmittel zusammen mit dem Wasser in einer Konzentration von weniger als 10%, vorzugsweise in einer Konzentration von 2 bis weniger als 10% eingebracht wird. Die eingesetzte Menge an ammoniakhaltigem Reduktionsmittel wird vorzugsweise in Abhängigkeit der im Bypassgas vorhandenen Stickoxide geregelt. Dazu wird beispielsweise an einem Kamin des Bypasssystems oder nach einem Staubfilter des Bypasssystems der Stickoxidgehalt in den Bypassgasen ermittelt und zur Einstellung der Konzentration verwendet. Die Mischung aus Wasser und dem ammoniakhaltigen Reduktionsmittel dient somit einerseits zur Kühlung und andererseits zur Entstickung. Die Konzentration der wässrigen Ammoniaklösung ist daher geringer als bei herkömmlichen SNCR-Verfahren, bei denen das ammoniakhaltige Reduktionsmittel auch als wässrige Lösung eingebracht wird, dort aber keinen wesentlichen Beitrag zur Kühlung leistet.

Neben Wasser ist auch Luft als wenigstens ein Teil des Kühlmittels denkbar. Auch können Feststoffe, insbesondere Rohmehl und/oder Filterstaub aus dem Verfahren zur Herstellung von Zementklinker, als wenigstens ein Teil des Kühlmittels eingesetzt werden. Wird Luft zur Kühlung vorgesehen, wird das ammoniakhaltige Reduktionsmittel vorzugsweise in gasförmiger Form zusammen mit der zur Kühlung dienenden Luft aufgegeben.

Um die Anbackungen durch im Bypassgas enthaltene Alkali-Salze möglichst gering zu halten, wird das Bypassgas nach der Entstickung auf weniger als 400°C, vorzugsweise auf weniger als 300°C und höchstvorzugsweise auf weniger als 200°C abgekühlt.

Für eine möglichst schnelle und effiziente SNCR-Reaktion kann die Einrichtung zur Aufgabe des Reduktionsmittels durch ein oder mehrere Lanzen gebildet werden, die jeweils mehrere, insbesondere mehr als drei Öffnungen aufweisen. Eine weitere Maßnahme zur effizienten Umsetzung zwischen NO und NH₃ wird dadurch erreicht, dass die Bypassleitung in Strömungsrichtung des Bypassgases nach der Einrichtung zur Aufgabe des ammoniakhaltigen Reduktionsmittels Wandbereiche aufweist, die mit dem Bypassgas in Kontakt kommen und aus einem das ammoniakhaltige Reduktionsmittel absorbierenden Material, insbesondere aus wenigstens 30% TiO₂, vorzugsweise wenigstens 50% TiO₂ bestehen. Dieses Material soll aber kein katalytisch aktives V₂O₅ aufweisen.

Eine weitere Umsatzsteigerung kann dadurch erreicht werden, dass sich an oder in Strömungsrichtung nach der Aufgabestelle des ammoniakhaltigen Reduktionsmittels in das Bypassgases eine Vermischungszone anschließt, die beispielsweise aus Düsen und/oder einem Zyklon und/oder Umlenkungen und/oder einem Wirbeltopf besteht.

Gemäß einer besonderen Ausgestaltung der Erfindung wird das Bypassgas zunächst mittels Luft gekühlt und anschließend mittels Wasser auf den Temperaturbereich zwischen 800°C und 1100°C weiter abgekühlt, wobei gleichzeitig das ammoniakhaltige Reduktionsmittel zugegeben wird. Nachfolgend wird das Bypassgas wiederum durch Luft weiter abgekühlt, bevor es einem Staubfilter zugeführt wird.

Da schlüpfendes Ammoniak durch die Reaktion mit Chlor oder Schwefel eine Aerosolbildung hervorrufen kann, ist eine Entfernung der sauren Komponenten aus dem Abgas, beispielsweise mit Hilfe von eingedüstem Kalkhydrat, Branntkalk oder Bicarbonat möglich. Bevorzugt erfolgt die Abscheidung der entstehenden Rauchgasreinigungsprodukte simultan mit dem Staub im Staubfilter.

Weitere Ausgestaltungen und Vorteile der Erfindung werden anhand der nachfolgenden Beschreibung und der Zeichnung näher erläutert.

In der Zeichnung zeigen
- Fig. 1: eine schematische Darstellung einer Anlage zur Herstellung von Zementklinker mit einem erfindungsgemäßen Bypasssystem,
- Fig. 2: eine schematische Darstellung des Bypassstems gemäß einem bevorzugten Ausführungsbeispiel,
- Fig. 3: eine schematische Querschnittsdarstellung einer Einrichtung zur Aufgabe des ammoniakhaltigen Reduktionsmittels gemäß einem ersten Ausführungsbeispiel und
- Fig. 4: eine schematische Querschnittsdarstellung einer Einrichtung zur Aufgabe des ammoniakhaltigen Reduktionsmittel gemäß einem zweiten Ausführungsbeispiel.

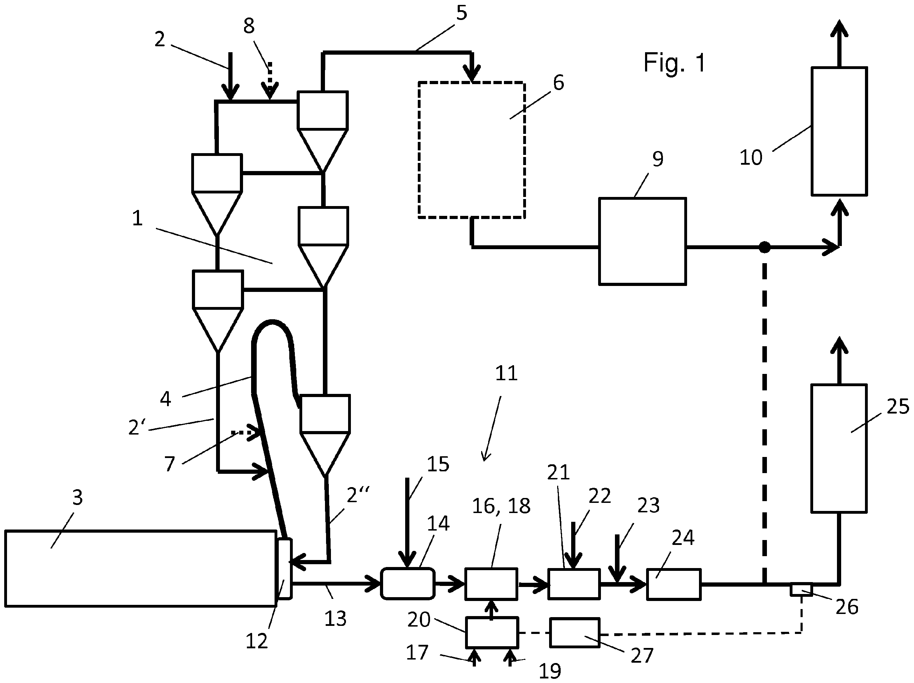

Die in Fig. 1 dargestellte Anlage zur Herstellung von Zementklinker besteht im Wesentlichen aus einer Vorwärmereinrichtung 1, der hier als 5-stufiger Zyklonvorwärmer ausgebildet ist und in dem Rohmehl 2 mit Abgasen aus einer, hier als Drehrohrofen ausgebildeten Wärmebehandlungseinrichtung 3 vorgewärmt wird. Das vorgewärmte Material 2' gelangt anschließend in einem Calcinator 4 der ebenfalls von Abgasen des der Wärmebehandlungseinrichtung 3 durchströmt wird. Das vorcaclinierte Rohmehl 2" wird schließlich in der Wärmebehandlungseinrichtung 3 fertiggebrannt. Das die Vorwärmereinrichtung 1 verlassene Abgas 5 wird ggf. in einem optionalen SCR-Reaktor 6 entstickt. Darüber hinaus kann eine Entstickung des Abgases auch nach dem SNCR-Verfahren erfolgen, indem im Bereich des Calcinators 4 Mittel 7 zur Eindüsung eines ammoniakhaltigen Reduktionsmittels vorgesehen sind. Optionale Mittel 8 zur Eindüsung eines solchen Reduktionsmittels könne zudem im oberen Bereich der Vorwärmereinrichtung 1 angeordnet werden. Nach dem SCR-Reaktor 6 wird das Abgas in einem Staubfilter 9 entstaubt, bevor es über einen Kamin 10 in die Atmosphäre gelangt. Selbstverständlich können zusätzliche Einrichtungen zur Abgasbehandlung und Schadstoffminderung vorgesehen werden.

Zur Unterbrechung der zwischen Wärmebehandlungseinrichtung 3 und Vorwärmer 1 entstehenden Schadstoffkreisläufe, insbesondere einem Chlorkreislauf, ist ein Bypasssystem 11 vorgesehen. Hierzu wird im Bereich des Einlaufs 12 ein Teil der Abgase als Bypassgas über eine Bypassleitung 13 abgezogen. Je nachdem, welcher Brennstoff im Bereich der Wärmebehandlungseinrichtung 3 und des Calcinators 4 verwendet wird, kann die als Bypassgas abzuziehende Menge durchaus 10% und mehr des aus der Wärmebehandlungseinrichtung 3 ausströmenden Abgases ausmachen.

Die Temperatur des im Bereich des Einlaufs 12 abgezogenen Bypassgases beträgt etwa 1.100°C bis 1.300°C und wird an einer ersten Einrichtung 14 zur Aufgabe eines ersten Kühlmittels 15 (insbesondere Wasser oder Luft) auf 950° bis 1050°C abgekühlt. In Strömungsrichtung des Bypassgases schließt sich dann eine zweite Einrichtung 16 zur Aufgabe eines zweiten Kühlmittels 17 an, die gleichzeitig auch als Einrichtung 18 zur Aufgabe eines ammoniakhaltigen Reduktionsmittels 19 dient. Das zweite Kühlmittel 17 (insbesondere Wasser oder Luft) und das ammoniakhaltige Reduktionsmittel 19 werden in einer Mischeinrichtung 20 im gewünschten Verhältnis miteinander vermischt und dann über gemeinsam genutzte, in der Bypassleitung 13 mündende Düsen oder Lanzen in das Bypassgas eingebracht. Durch das zweite Kühlmittel 17 verringert sich die Temperatur des Bypassgases auf 800°C bis 1.000°C, insbesondere auf 850°C bis 950°C. In diesem Temperaturfenster ist eine effektive Stickoxidminderung möglich.

In Strömungsrichtung der Bypassgase schließlich dann an die Einrichtungen 16, 18 eine dritte Einrichtung 21 zur Aufgabe eines dritten Kühlmittels 22 (Wasser oder Luft) an. Der Abstand zwischen der Einrichtung 18 zur Aufgabe des ammoniakhaltigen Reduktionsmittels 19 und der dritten Einrichtung 21 ist dabei so bemessen, dass die SNCR-Reaktion im Wesentlichen abgeschlossen ist.

Da schlüpfendes Ammoniak durch die Reaktion mit Chlor oder Schwefel eine Aerosolbildung hervorrufen kann, ist eine Entfernung der sauren Komponenten aus dem Bypassgas, beispielsweise mit Hilfe von eingedüstem Kalkhydrat, Branntkalk oder Bicarbonat, zweckmäßig. Diese Mittel werden zweckmäßigerweise nach der dritten Einrichtung 21 zur Aufgabe des dritten Kühlmittels 22 über eine geeignete Einrichtung 23 zugegeben. Die Abscheidung der dabei entstehenden Rauchgasreinigungsprodukte kann anschließend zusammen mit dem im Bypassgas enthaltenen Staub an einem Staubfilter 24 erfolgen, bevor das Bypassgas über einen separaten Bypasskamin 25 oder den Kamin 10 in die Atmosphäre geleitet wird.

Der Stickoxidgehalt in dem Bypassgasen wird zweckmäßigerweise zwischen dem Staubfilter 24 und dem Bypasskamin 25 über einen geeigneten Sensor 26 gemessen, wobei über eine Steuereinrichtung 27 das Mengenverhältnis zwischen dem zweiten Kühlmittel 17 und dem ammoniakhaltigen Reduktionsmittel anhand des über den Sensor 26 ermittelten Stickoxidgehalts eingestellt wird. Die Steuereinrichtung kann des Weiteren mit Temperaturfühlern in der Bypassleitung in Verbindung stehen, um die Menge der verschiedenen Kühlmittel 15, 17, 22 zu dosieren.

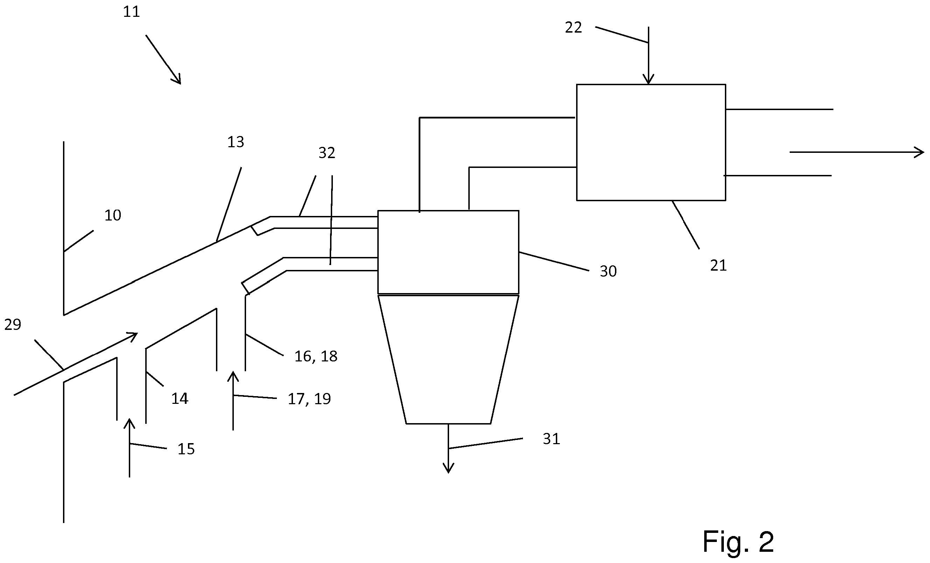

Aus Fig. 2 sind weitere Details einer bevorzugten Ausgestaltung des Bypasssystems ersichtlich. Die erste Einrichtung 14 zur Aufgabe des ersten Kühlmittels 15 und die zweite Einrichtung 16 zur Aufgabe des zweiten Kühlmittels sowie die Einrichtung 18 zur Aufgabe des ammoniakhaltigen Reduktionsmittels 19 werden hier durch Düsen gebildet, die in der Bypassleitung 13 münden. Anstelle von Düsen können aber beispielsweise auch Lanzen vorgesehen werden, die in die Bypassleitung 13 hineinragen und mehrere Öffnungen aufweisen, um eine möglichst gleichmäßige Versteilung der Kühlmittel bzw. des ammoniakhaltigen Reduktionsmittels zu gewährleisten.

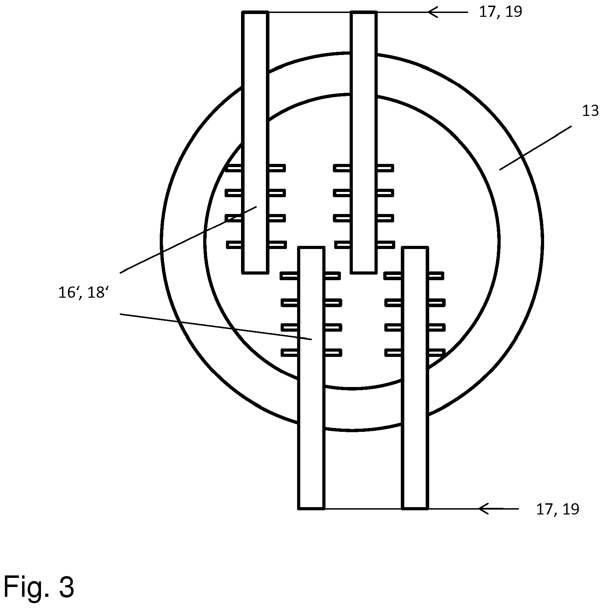

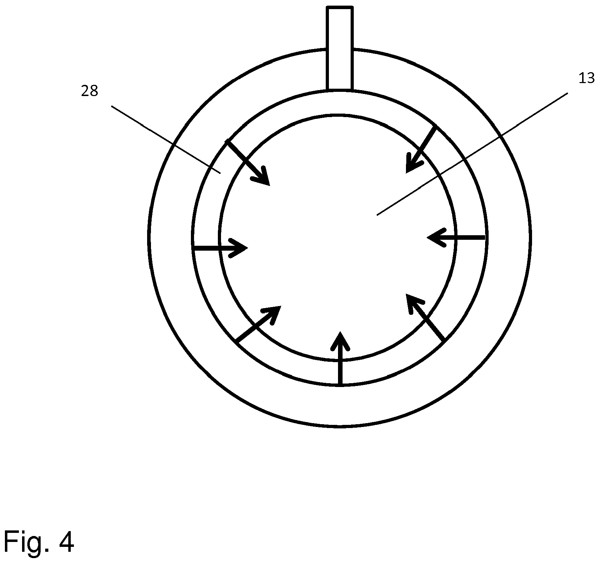

Fig. 3 zeigt ein Ausführungsbeispiel mit Lanzen 16', 18' zur gleichzeitigen Aufgabe des zweiten Kühlmittels 17 und des ammoniakhaltigen Reduktionsmittels 19. Die erste Einrichtung 14 zur Aufgabe des ersten Kühlmittels 15 und auch die dritte Einrichtung 21 zur Aufgabe des dritten Kühlmittels 22 könnten entsprechend ausgebildet sein. Eine alternative Art der Einbringung ist in Fig. 4 dargestellt, bei der das Kühlmittel bzw. das ammoniakhaltige Reduktionsmittel über eine Ringleitung 28 der Bypassleitung 23 zugeführt werden, wobei die Ringleitung 28 eine Vielzahl von über den Umfang verteilt angeordnete Düsen aufweist, die in die Bypassleitung 13 münden.

Eine weitere Maßnahme zur effizienten Umsetzung zwischen NO und NH₃ wird dadurch erreicht, dass die Bypassleitung 13 in Strömungsrichtung des Bypassgases 29 nach der Einrichtung 18 zur Aufgabe des ammoniakhaltigen Reduktionsmittels 19 Wandbereiche 32 aufweist, die mit dem Bypassgas 29 in Kontakt kommen und aus einem das ammoniakhaltige Reduktionsmittel absorbierenden Material, insbesondere aus wenigstens 30% TiO₂ bestehen (Fig. 2). Diese Wandbereiche sollen aber nicht als SCR-Katalysator wirken und weisen daher kein Vanadiumoxid auf.

Im Anschluss schließt sich daran in Strömungsrichtung der Bypassgase 29 ein Zyklon 30 an, der eine innige Vermischung des Bypassgases mit dem Kühlmittels 17 und dem ammoniakhaltigen Reduktionsmittel 19 bewirkt, sodass die die nicht katalytische Entstickung gemäß der nachfolgenden Gleichung ablaufen kann:

2 NO + 2 NH₃ + 0,5 O₂ → 2 N₂ + 3 H₂O

Etwaiger, im Zyklon anfallender Staub 31 kann aus dem Zyklon ausgetragen werden, während das entstickte Bypassgas anschließend in die dritte Einrichtung 21 gelangt, wo es mittels des dritten Kühlmittels 22, insbesondere Frischluft, auf weniger als 400°C, vorzugsweise weniger als 200°C und höchstvorzugsweise auf weniger als 150°C abgekühlt wird. Anschließend gelangt das Abgas in den Staubfilter 24 und wird schließlich über den Bypasskamin 25 in die Atmosphäre abgeleitet.

## Patentansprüche

1. Verfahren zur Herstellung von Zementklinker oder anderen mineralischen Produkten und zur Entstickung von Bypassgasen, wobei zwischen einer Wärmebehandlungseinrichtung (3) und wenigstens einer Vorwärmereinrichtung (1) ein Bypassgas (29) abgezweigt wird,
wobei das Bypassgas (29) mittels wenigstens einem Kühlmittel (15, 17, 22) auf eine Temperatur zwischen 800°C und 1.100°C abgekühlt wird und ein ammoniakhaltiges Reduktionsmittel (19) in fester, wässriger und/oder gasförmiger Form in das Bypassgas zur Minderung der enthaltenen Stickoxide eingebracht wird, **dadurch gekennzeichnet, dass** das ammoniakhaltige Reduktionsmittel (19) zusammen mit dem wenigstens einen Kühlmittel (17) in das Bypassgas (29) eingebracht wird.

2. Verfahren nach Anspruch 1, **dadurch gekennzeichnet, dass** das Bypassgas (29) für maximal 5s in einem Temperaturbereich zwischen 800°C und 1.100°C gehalten wird, um dann weiter abgekühlt zu werden.

3. Verfahren nach Anspruch 1, **dadurch gekennzeichnet, dass** das ammoniakhaltige Reduktionsmittel (19) zusammen mit dem wenigstens einen Kühlmittel (17) entgegen der Strömungsrichtung des Bypassgases in das Bypassgas eingebracht wird.

4. Verfahren nach Anspruch 1, **dadurch gekennzeichnet, dass** die eingesetzte Menge an ammoniakhaltigem Reduktionsmittel (19) in Abhängigkeit der im Bypassgas (29) vorhandenen Stickoxide geregelt wird.

5. Verfahren nach Anspruch 1, **dadurch gekennzeichnet, dass** das ammoniakhaltige Reduktionsmittel (19) zusammen mit dem Kühlmittel (17) aufgegeben wird und die Konzentration des ammoniakhaltigen Reduktionsmittels (19) im Kühlmittel (17) in Abhängigkeit der im Bypassgas vorhandenen Stickoxide eingestellt wird.

6. Verfahren nach Anspruch 1, **dadurch gekennzeichnet, dass** Luft als wenigstens ein Teil des Kühlmittels eingesetzt wird.

7. Verfahren nach Anspruch 1, **dadurch gekennzeichnet, dass** ein Feststoff, insbesondere Rohmehl und/oder Filterstaub aus dem Verfahren zur Herstellung von Zementklinker, als wenigstens ein Teil des Kühlmittels eingesetzt wird.

8. Verfahren nach Anspruch 1, **dadurch gekennzeichnet, dass** das ammoniakhaltige Reduktionsmittel (19) in gasförmiger Form zusammen mit der zur Kühlung dienenden Luft aufgegeben wird.

9. Verfahren nach Anspruch 1, **dadurch gekennzeichnet, dass** das Bypassgas (29) nach der Entstickung auf weniger als 400°C abgekühlt wird.

10. Anlage zur Herstellung von Zementklinker oder anderen mineralischen Produkten mit einer Wärmebehandlungseinrichtung (3) und wenigstens einer Vorwärmereinrichtung (1) sowie einem Bypasssystem (11), wobei das Bypasssystem (11) eine zwischen Wärmebehandlungseinrichtung (3) und der wenigstens einen Vorwärmereinrichtung (1) abzweigende Bypassleitung (13) zur Abzweigung von Bypassgas (29), wenigstens eine Einrichtung (14, 16, 21) zur Aufgabe eines Kühlmittels (15, 17, 22) und wenigstens eine Entstickungszone zur selektiven nichtkatalytischen Entstickung mit einer Einrichtung (18) zur Aufgabe von ammoniakhaltigem Reduktionsmittel (19) aufweist,
**dadurch gekennzeichnet, dass** die Einrichtung (16) zur Aufgabe des Kühlmittels (17) und die Einrichtung (18) zur Aufgabe des ammoniakhaltigen Reduktionsmittels (19) gemeinsam genutzte, in der Bypassleitung mündende Düsen oder Lanzen aufweisen.

11. Anlage nach Anspruch 10, **dadurch gekennzeichnet, dass** die Einrichtung (18) zur Aufgabe des ammoniakhaltigen Reduktionsmittels (19) durch eine oder mehrere Lanzen gebildet wird, die jeweils mehrere Öffnungen aufweisen.

12. Anlage nach Anspruch 10, **dadurch gekennzeichnet, dass** die Bypassleitung (13) in Strömungsrichtung des Bypassgases (29) nach der Einrichtung (18) zur Aufgabe des ammoniakhaltigen Reduktionsmittels (19) Wandbereiche aufweist, die mit dem Bypassgas (29) in Kontakt kommen und aus einem das ammoniakhaltige Reduktionsmittel (19) absorbierenden Material bestehen.

13. Anlage nach Anspruch 10, **dadurch gekennzeichnet, dass** die Bypassleitung (13) in Strömungsrichtung des Bypassgases (29) nach der Einrichtung (18) zur Aufgabe des ammoniakhaltigen Reduktionsmittels (19) eine weitere Einrichtung (21) zur Aufgabe eines Kühlmittels (22) aufweist.

14. Anlage nach Anspruch 10, **dadurch gekennzeichnet, dass** die Bypassleitung (13) in Strömungsrichtung des Bypassgases (29) vor oder an der Einrichtung (18) zur Aufgabe des ammoniakhaltigen Reduktionsmittels (19) wenigstens eine erste und eine zweite Einrichtung (14, 16) zur Aufgabe eines Kühlmittels (15, 17) aufweist und sich nach der Einrichtung (18) zur Aufgabe des ammoniakhaltigen Reduktionsmittels (19) wenigstens eine dritte Einrichtung (21) zur Aufgabe eines Kühlmittels (22) anschließt.

15. Anlage nach Anspruch 10, **dadurch gekennzeichnet, dass** sich an oder in Strömungsrichtung des Bypassgases (29) eine Vermischungszone anschließt, die beispielsweise aus Düsen und/oder einem Zyklon (30) und/oder Umlenkungen und/oder einem Wirbeltopf besteht.

16. Anlage nach Anspruch 10, **dadurch gekennzeichnet, dass** das Bypasssystem (11) einen in Strömungsrichtung des Bypassgases (29) nach der selektive nichtkatalytischen Entstickungszone angeordneten Staubfilter (24) aufweist.

## Claims

1. Process for the production of cement clinker or other mineral products and for the denitrification of bypass gases, wherein a bypass gas (29) is branched off between a heat treatment device (3) and at least one preheating device (1),
wherein the bypass gas (29) is cooled to a temperature between 800°C and 1,100°C by means of at least one coolant (15, 17, 22) and an ammonia-containing reducing agent (19) is introduced into the bypass gas in solid, aqueous and/or gaseous form to reduce the nitrogen oxides contained therein, **characterised in that** the ammonia-containing reducing agent (19) is introduced into the bypass gas (29) together with the at least one coolant (17).

2. Method according to claim 1, **characterised in that** the bypass gas (29) is kept in a temperature range between 800°C and 1,100°C for a maximum of 5s and is then cooled further.

3. Method according to claim 1, **characterised in that** the ammonia-containing reducing agent (19) is introduced into the bypass gas together with the at least one coolant (17) against the direction of flow of the bypass gas.

4. Process according to claim 1, **characterised in that** the quantity of ammonia-containing reducing agent (19) used is regulated as a function of the nitrogen oxides present in the bypass gas (29).

5. Process according to claim 1, **characterised in that** the ammonia-containing reducing agent (19) is added together with the coolant (17) and the concentration of the ammonia-containing reducing agent (19) in the coolant (17) is adjusted as a function of the nitrogen oxides present in the bypass gas.

6. Method according to claim 1, **characterised in that** air is used as at least part of the coolant.

7. Process according to claim 1, **characterised in that** a solid, in particular raw meal and/or filter dust from the process for producing cement clinker, is used as at least part of the coolant.

8. Process according to claim 1, **characterised in that** the ammonia-containing reducing agent (19) is fed in gaseous form together with the air used for cooling.

9. Process according to claim 1, **characterised in that** the bypass gas (29) is cooled to less than 400°C after denitrification.

10. Plant for the production of cement clinker or other mineral products with a heat treatment device (3) and at least one preheater device (1) as well as a bypass system (11), wherein the bypass system (11) comprises a bypass line (13) branching off between the heat treatment device (3) and the at least one preheater device (1) for branching off bypass gas (29), at least one device (14, 16, 21) for feeding a coolant (15, 17, 22) and at least one denitrification zone for selective non-catalytic denitrification with a device (18) for feeding ammonia-containing reducing agent (19),
**characterised in that** the device (16) for feeding the coolant (17) and the device (18) for feeding the ammonia-containing reducing agent (19) have jointly used nozzles or lances which open into the bypass line.

11. Plant according to claim 10, **characterised in that** the device (18) for feeding the ammonia-containing reducing agent (19) is formed by one or more lances, each of which has a plurality of openings.

12. System according to claim 10, **characterised in that** the bypass line (13) has wall regions in the direction of flow of the bypass gas (29) downstream of the device (18) for feeding the ammonia-containing reducing agent (19), which wall regions come into contact with the bypass gas (29) and consist of a material which absorbs the ammonia-containing reducing agent (19).

13. System according to claim 10, **characterised in that** the bypass line (13) has a further device (21) for feeding a coolant (22) in the direction of flow of the bypass gas (29) after the device (18) for feeding the ammonia-containing reducing agent (19).

14. System according to claim 10, **characterised in that** the bypass line (13) has at least a first and a second device (14, 16) for feeding a coolant (15, 17) upstream of or at the device (18) for feeding the ammonia-containing reducing agent (19) in the direction of flow of the bypass gas (29) and at least a third device (21) for feeding a coolant (22) is connected downstream of the device (18) for feeding the ammonia-containing reducing agent (19).

15. System according to claim 10, **characterised in that** a mixing zone is connected to or in the direction of flow of the bypass gas (29), which consists, for example, of nozzles and/or a cyclone (30) and/or deflectors and/or a swirl pot.

16. System according to claim 10, **characterised in that** the bypass system (11) has a dust filter (24) arranged downstream of the selective non-catalytic denitrification zone in the direction of flow of the bypass gas (29).

## Revendications

1. Procédé de production de clinker de ciment ou d'autres produits minéraux et de dénitrification des gaz de dérivation, dans lequel un gaz de dérivation (29) est dérivé entre un dispositif de traitement thermique (3) et au moins un dispositif de préchauffage (1),
dans lequel le gaz de dérivation (29) est refroidi à une température comprise entre 800°C et 1 100°C au moyen d'au moins un agent de refroidissement (15, 17, 22) et un agent réducteur contenant de l'ammoniac (19) est introduit dans le gaz de dérivation sous forme solide, aqueuse et/ou gazeuse pour réduire les oxydes d'azote qu'il contient, **caractérisé par le fait que** l'agent réducteur contenant de l'ammoniac (19) est introduit dans le gaz de dérivation (29) en même temps qu'au moins un agent de refroidissement (17).

2. Méthode selon la revendication 1, **caractérisée par le fait que** le gaz de dérivation (29) est maintenu dans une plage de température comprise entre 800°C et 1 100°C pendant 5 secondes au maximum, puis est refroidi.

3. Procédé selon la revendication 1, **caractérisé par le fait que** l'agent réducteur contenant de l'ammoniac (19) est introduit dans le gaz de dérivation avec au moins un agent de refroidissement (17) dans le sens inverse de l'écoulement du gaz de dérivation.

4. Procédé selon la revendication 1, **caractérisé par le fait que la** quantité d'agent réducteur ammoniacal (19) utilisée est régulée en fonction des oxydes d'azote présents dans le gaz de dérivation (29).

5. Procédé selon la revendication 1, **caractérisé par le fait que** l'agent réducteur contenant de l'ammoniac (19) est ajouté au liquide de refroidissement (17) et que la concentration de l'agent réducteur contenant de l'ammoniac (19) dans le liquide de refroidissement (17) est ajustée en fonction des oxydes d'azote présents dans le gaz de dérivation.

6. Méthode selon la revendication 1, **caractérisée par le fait que l**'air est utilisé comme au moins une partie du liquide de refroidissement.

7. Procédé selon la revendication 1, **caractérisé par le fait qu'**un solide, en particulier de la farine crue et/ou de la poussière de filtre provenant du processus de production de clinker de ciment, est utilisé comme au moins une partie du liquide de refroidissement.

8. Procédé selon la revendication 1, **caractérisé par le fait que** l'agent réducteur contenant de l'ammoniac (19) est introduit sous forme gazeuse avec l'air utilisé pour le refroidissement.

9. Procédé selon la revendication 1, **caractérisé par le fait que** le gaz de dérivation (29) est refroidi à moins de 400°C après dénitrification.

10. Installation pour la production de clinker de ciment ou d'autres produits minéraux avec un dispositif de traitement thermique (3) et au moins un dispositif de préchauffage (1) ainsi qu'un système de dérivation (11), dans lequel le système de dérivation (11) comprend une conduite de dérivation (13) dérivant entre le dispositif de traitement thermique (3) et au moins un dispositif de préchauffage (1) pour la dérivation du gaz de dérivation (29), au moins un dispositif (14, 16, 21) pour alimenter un liquide de refroidissement (15, 17, 22) et au moins une zone de dénitrification pour une dénitrification sélective non catalytique avec un dispositif (18) pour alimenter un agent réducteur contenant de l'ammoniac (19),
**caractérisé par le fait que** le dispositif (16) d'alimentation du liquide de refroidissement (17) et le dispositif (18) d'alimentation de l'agent réducteur contenant de l'ammoniac (19) utilisent conjointement des buses ou des lances qui débouchent dans la conduite de dérivation.

11. Installation selon la revendication 10, **caractérisée par le fait que** le dispositif (18) d'alimentation en agent réducteur contenant de l'ammoniac (19) est constitué d'une ou de plusieurs lances, chacune d'entre elles présentant une pluralité d'ouvertures.

12. Système selon la revendication 10, **caractérisé par le fait que** la conduite de dérivation (13) présente, dans le sens d'écoulement du gaz de dérivation (29) en aval du dispositif (18) d'alimentation en agent réducteur contenant de l'ammoniac (19), des zones de paroi qui entrent en contact avec le gaz de dérivation (29) et sont constituées d'un matériau qui absorbe l'agent réducteur contenant de l'ammoniac (19).

13. Système selon la revendication 10, **caractérisé par le fait que** la conduite de dérivation (13) comporte un autre dispositif (21) pour alimenter un réfrigérant (22) dans le sens d'écoulement du gaz de dérivation (29) après le dispositif (18) d'alimentation de l'agent réducteur contenant de l'ammoniac (19).

14. Système selon la revendication 10, **caractérisé par le fait que** la conduite de dérivation (13) comporte au moins un premier et un deuxième dispositif (14, 16) pour alimenter un réfrigérant (15, 17) en amont ou au niveau du dispositif (18) pour alimenter l'agent réducteur contenant de l'ammoniac (19) dans le sens d'écoulement du gaz de dérivation (29) et au moins un troisième dispositif (21) pour alimenter un réfrigérant (22) est raccordé en aval du dispositif (18) pour alimenter l'agent réducteur contenant de l'ammoniac (19).

15. Système selon la revendication 10, **caractérisé par le fait qu'**une zone de mélange est reliée au gaz de dérivation (29) ou se trouve dans le sens de l'écoulement de celui-ci ; cette zone est constituée, par exemple, de buses et/ou d'un cyclone (30) et/ou de déflecteurs et/ou d'un pot à remous.

16. Système selon la revendication 10, **caractérisé par le fait que** le système de dérivation (11) comporte un filtre à poussière (24) disposé en aval de la zone de dénitrification sélective non catalytique dans le sens d'écoulement du gaz de dérivation (29).
